# EUROPEAN PATENT SPECIFICATION

(11) **EP 2 794 289 B1**
(45) Date of publication and mention of the grant of the patent: **23.03.2016**
(21) Application number: 12826562.6
(22) Date of filing: 24.12.2012
(51) Int. Cl.: B60C 1/00, C08K 7/04, C08L 9/06, C08L 21/00, C08K 5/548

(54) **RUBBER TYRE COMPOUND**
KAUTSCHUKREIFENVERBUNDSTOFF
COMPOSÉ DE PNEUMATIQUE EN CAOUTCHOUC

(30) Priority: 23.12.2011 IT TO20111208
(43) Date of publication of application: 29.10.2014
(73) Proprietor: Bridgestone Corporation, Tokyo 104-8340 (JP)
(72) Inventor: BOTTI, Francesco, I-00154 Roma (IT); AGORETTI, Pasquale, I-00128 Roma (IT)
(74) Representative: Bosman, Cesare
(86) International application number: PCT/IB2012/057693
(87) International publication number: WO 2013/093897

(56) References cited:
- EP-A1- 1 930 374
- WO-A1-2004/101872
- JP-A- 2008 291 395
- US-A- 4 042 742
- US-A1- 2007 261 385

## Description

### TECHNICAL FIELD

The present invention relates to a new rubber tyre compound composition. More specifically, the present invention relates to a new tread compound composition.

### BACKGROUND ART

Silica has long been used as a reinforcing filler in tread compounds, as a partial or total substitute for carbon black.

Silica has advantages over carbon black in terms of both rolling resistance and wet road-holding performance.

Silica is used in conjunction with silane bonding agents, which bond with silanol groups to prevent silica particles from forming hydrogen bonds, and at the same time bond the silica chemically to the polymer base.

Trialkoxymercaptoalkyl-silanes are a particularly interesting class of silane bonding agents, especially as regards the advantages they afford in terms of rolling resistance and reducing volatile substance emission.

More specifically, the most effective e compound has been found to be :

SH (CH₂) ₃Si (OCH₂CH₃) (O (CH₂CH₂O) ₅ (CH₂) ₁₃CH₃) ₂

Trialkoxymercaptoalkyl-silanes, however, while improving rolling resistance, have been found to aggravate abrasion resistance.

As will be clear to any expert in the field, such a drawback may have serious issues in certain types of tyres.

Increasing the silica in the compound would only improve abrasion resistance at the expense of improvements in rolling resistance.

A need is therefore felt for a rubber tyre compound whose abrasion resistance performance is not compromised by using trialkoxymercaptoalkyl-silanes to reduce rolling resistance.

The Applicant has surprisingly discovered that using short basalt fibres in rubber tyre compounds ensures superior abrasion resistance, even in the presence of trialkoxymercaptoalkyl-silanes, while at the same time improving rolling resistance.

Basalt is a dark or black effusive volcanic rock usually containing 50% silica (SiO₂). More specifically, basalt contains 45-55% SiO₂, 10-15% Al₂O₃, 15-20% CaO, 5-14% FeO, 5-12% MgO, 2-6% alkalis, and 0.5-2% TiO₂.

Basalt has the advantage of being convertible to fibres in the same way as glass. More specifically, it is heated to melting temperature (about 1400°C) in a refractory furnace, and the melt is extruded through minute holes in a mainly platinum container to form continuous basalt threads.

Basalt has superior mechanical characteristics, while at the same time being extremely cheap.

Because of their heat-insulating and soundproofing properties, chemical stability, and stable mechanical properties, even at high temperature, basalt fibres have so far been used in civil applications.

### DISCLOSURE OF INVENTION

According to the present invention, there is provided a rubber tyre compound comprising a polymer base; said compound being characterized by comprising basalt fibres with a length/diameter ratio ranging from 20 to 2000 and preferably from 100 to 300.

Preferably, the compound comprises 1 to 20 phr, and preferably 8 to 12 phr, of basalt fibres.

Preferably, said basalt fibres are coated with a silane bonding agent.

Preferably, the compound comprises silica, and a silane bonding agent in the trialkoxymercaptoalkyl-silane class. Preferably, the silane bonding agent is of molecular formula (1)

SH (CH₂)₃Si (OCH₂CH₃) (O(CH₂CH₂O)₅(CH₂)₁₃CH₃)₂ (I)

Preferably, the compound comprises silica with a surface area of 100 to 220 m²/g.

Preferably, said polymer base comprises a LMW S-SBR polymer compound containing 20 to 50% styrene and 30 to 70% vinyl, and comprising 10-90% of a first fraction with a mean molecular weight of 50 to 100x10³ and a molecular weight distribution of ≤1.5, and 10-90% of a second fraction with a mean molecular weight of 800 to 1500x10³ and a molecular weight distribution of ≤3.0.

S-SBR stands for styrene-butadiene rubber obtained in solution, and E-SBR for styrene-butadiene rubber obtained in emulsion.

### BEST MODE FOR CARRYING OUT THE INVENTION

The following are non-limiting examples for a clearer understanding of the present invention.

### EXAMPLES

Two control compounds (A, B) and four compounds in accordance with the invention (C-F) were produced.

More specifically, compound A contains a silane bonding agent not in the trialkoxymercaptoalkyl-silane class, and compound B contains a silane bonding agent of formula (I) in the trialkoxymercaptoalkyl-silane class. Comparison of the test data of compounds A and B clearly shows how the silane bonding agent of formula (I) improves rolling resistance but aggravates abrasion resistance.

The four compounds C-F according to the invention contain basalt fibres as a partial substitute for silica. More specifically, both basalt fibres coated with silane bonding agent and uncoated basalt fibres were used. And both types of fibres were used with and without LMW S-SBR.

Each of the compounds produced was rolling resistance and abrasion resistance tested.

The compounds in the examples were produced using the procedure below:

### - compound preparation -

### (first mixing stage)

A 230-270-litre tangential-rotor mixer was first loaded with the polymer base, silica, silane bonding agent, and basalt fibres (if any), to a fill factor of 66-72%.

The mixer was operated at a speed of 40-60 rpm, and the resulting compound was unloaded on reaching a temperature of 140-160°C.

### (second mixing stage)

The compound from the previous stage was processed further in the mixer operated at a speed of 40-60 rpm, and was unloaded on reaching a temperature of 130-150°C.

### (third mixing stage)

The curing system of sulphur and accelerants was added to the compound from the previous stage to a fill factor of 63-67%.

The mixer was operated at a speed of 20-40 rpm, and the resulting compound was unloaded on reaching a temperature of 100-110°C.

Table I shows the compositions in phr of the five compounds.

**TABLE I**

| | A | B | C | D | E | F |
|---|---|---|---|---|---|---|
| E-SBR | 40 | 40 | 40 | -- | 40 | -- |
| S-SBR | 60 | 60 | 60 | 60 | 60 | 60 |
| LMW S-SBR | -- | -- | -- | 40 | -- | 40 |
| SILICA | 80 | 80 | 70 | 70 | 70 | 70 |
| SILANE1 | 8 | -- | -- | -- | -- | -- |
| SILANE2 | | 8 | 8 | 8 | 8 | 8 |
| BASALT FIBRES | -- | -- | 10 | 10 | -- | -- |
| BASALT FIBRES COATED WITH SILANE BONDING AGENT | -- | -- | -- | -- | 10 | 10 |
| Zn OXIDE | 2.5 | 2.5 | 2.5 | 2.5 | 2.5 | 2.5 |
| SULPHUR | 1.3 | 1.3 | 1.3 | 1.3 | 1.3 | 1.3 |
| ACCELERANTS | 3.0 | 3,0 | 3.0 | 3.0 | 3.0 | 3.0 |

SILICA is marketed by EVONIK under the trade name VN3, and has a surface area (N2SA) of 170m²/g.

SILANE1 is a silane bonding agent marketed by DEGUSSA under the trade name SI75.

SILANE2 is of molecular formula (I)

SH(CH₂)₃Si (OCH₂CH₃) (O(CH₂CH₂O)₅(CH₂)₁₃CH₃)₂ (I)

E-SBR contains 23-45% styrene.

S-SBR contains 25-45% styrene and 20-70% vinyl, and has a mean molecular weight of 800 to 1500x10³ and a molecular weight distribution of ≤3.0.

LMW S-SBR is an S-SBR polymer compound containing 20-50% styrene and 30-70% vinyl, and comprising 10-90% of a first fraction with a mean molecular weight of 50 to 100x10³ and a molecular weight distribution of <1.5, and 10-90% of a second fraction with a mean molecular weight of 800 to 1500x10³ and a molecular weight distribution of <3.0.

The basalt fibres used are 3 mm long and 13 µm in diameter, and the silane bonding agent coating is epoxy-compatible. Other types of coatings are bis-trialkoxy-alkyl-sulphide silane or trialcoxy-alkyl-mercapto silane.

As stated, compounds A-F were rolling resistance and abrasion resistance tested. The test results were indexed with respect to the compound A values.

More specifically, rolling resistance was extrapolate from the Tanδ values measured as per ASTM Standard D5992, and abrasion resistance was measured as per DIN Standard 53516.

Table II shows the values indexed with respect to compound A.

**TABLE II**

| | A | B | C | D | E | F |
|---|---|---|---|---|---|---|
| Rolling resistance | 100 | 110 | 110 | 110 | 115 | 115 |
| Abrasion resistance | 100 | 90 | 100 | 105 | 110 | 115 |

As shown by the Table II values, the basalt fibres (compound C) make up for the abrasion resistance losses caused using the silane bonding agent of formula (I) (compound B), but without compromising the rolling resistance values. And using LMW S-SBR further improves abrasion resistance (compounds D and F).

Particularly surprising is how the basalt fibres coated with silane bonding agent (compounds E and F) also bring about noticeable improvements in terms of rolling resistance.

An important point to note is that basalt fibres comprising a main component of SiO₂ can be coated with a silane bonding agent by which to interact with the polymer base more effectively than other reinforcing materials, such as Kevlar and carbon.

## Claims

1. A rubber tyre compound comprising a polymer base; said compound being **characterized by** comprising basalt fibres with a length/diameter ratio ranging from 20 to 2000.

2. A rubber tyre compound as claimed in Claim 1, **characterized by** comprising a curing system, which cures the polymer base by means of heating.

3. A rubber tyre compound as claimed in Claim 1 or 2, **characterized in that** the length/diameter ratio of the basalt fibres ranges from 100 to 300.

4. A rubber tyre compound as claimed in one of the foregoing Claims, **characterized by** comprising 1 to 20 phr of basalt fibres.

5. A rubber tyre compound as claimed in one of the foregoing Claims, **characterized by** comprising 8 to 12 phr of basalt fibres.

6. A rubber tyre compound as claimed in one of the foregoing Claims, **characterized in that** said basalt fibres are coated with a silane bonding agent.

7. A rubber tyre compound as claimed in one of the foregoing Claims, **characterized by** comprising silica, and a silane bonding agent in the trialkoxymercaptoalkyl-silane class.

8. A rubber tyre compound as claimed in Claim 7, **characterized in that** said silane bonding agent is of molecular formula (I)
SH(CH₂)₃Si(OCH₂CH₃) (O(CH₂CH₂O)₅(CH₂)₁₃CH₃)₂ (I)

9. A rubber tyre compound as claimed in Claim 7, **characterized in that** said silica has a surface area of 100 to 220 m²/g.

10. A rubber tyre compound as claimed in one of the foregoing Claims, **characterized in that** said polymer base comprises an S-SBR polymer compound containing 20 to 50% styrene and 30 to 70% vinyl, and comprising 10-90% of a first fraction with a mean molecular weight of 50 to 100x10³ and a molecular weight distribution of ≤1.5, and 10-90% of a second fraction with a mean molecular weight of 800 to 1500x10³ and a molecular weight distribution of ≤3.0.

11. A tread made from a compound as claimed in one of the foregoing Claims.

12. A tyre comprising a tread as claimed in Claim 11.

## Patentansprüche

1. Gummireifenmischung, die eine Polymerbasis umfasst; wobei die Mischung **dadurch gekennzeichnet ist, dass** sie Basaltfasern mit einem Längen-/Durchmesserverhältnis aufweist, das von 20 bis 2000 reicht.

2. Gummireifenmischung nach Anspruch 1, **dadurch gekennzeichnet, dass** sie ein Aushärtsystem umfasst, welches die Polymerbasis mittels Erhitzen aushärtet.

3. Gummireifenmischung nach Anspruch 1 oder 2, **dadurch gekennzeichnet, dass** das Längen-/Durchmesserverhältnis der Basaltfasern von 100 bis 300 reicht.

4. Gummireifenmischung nach einem der vorangegangenen Ansprüche, **dadurch gekennzeichnet, dass** sie 1 bis 20 phr an Basaltfasern umfasst.

5. Gummireifenmischung nach einem der vorangegangenen Ansprüche, **dadurch gekennzeichnet, dass** sie 1 bis 12 phr an Basaltfasern umfasst.

6. Gummireifenmischung nach einem der vorangegangenen Ansprüche, **dadurch gekennzeichnet, dass** die Basaltfasern mit einem Silanbindemittel beschichtet sind.

7. Gummireifenmischung nach einem der vorangegangenen Ansprüche, **dadurch gekennzeichnet, dass** sie Kieselsäure und ein Silanbindemittel aus der Klasse der Trialkoxymercaptoalkylsilane umfasst.

8. Gummireifenmischung nach Anspruch 7, **dadurch gekennzeichnet, dass** das Silanbindemittel die Molekularformel (I)
SH(CH₂)₃Si(OCH₂CH₃) (O(CH₂CH₂O)₅(CH₂)₁₃CH₃)₂ (I)
hat.

9. Gummireifenmischung nach Anspruch 7, **dadurch gekennzeichnet, dass** die Kieselsäure einen Oberflächenbereich von 100 bis 220 m²/g aufweist.

10. Gummireifenmischung nach einem der vorangegangenen Ansprüche, **dadurch gekennzeichnet, dass** die Polymerbasis eine S-SBR-Polymermischung umfasst, die 20 bis 50 % Styren und 30 bis 70 % Vinyl enthält, und, dass sie 10 bis 90% eines ersten Bruchteils mit einem Durchschnittsmolekulargewicht von 50 bis 100×10³ und einer Molekulargewichtsverteilung von ≤1,5 und 10 bis 90% eines zweiten Bruchteils mit einem Durchschnittsmolekulargewicht von 800 bis 1500×10³ und einer Molekulargewichtsverteilung ≤3,0 umfasst.

11. Lauffläche, die aus einer Verbindung hergestellt ist, wie in den vorangegangenen Ansprüchen beansprucht.

12. Reifen, der eine Lauffläche umfasst, wie in Anspruch 11 beansprucht.

## Revendications

1. Composé de bandage pneumatique en caoutchouc, comprenant un polymère de base, ledit composé étant **caractérisé en ce qu'**il comprend des fibres de basalte ayant un rapport longueur/diamètre allant de 20 à 2000.

2. Composé de bandage pneumatique en caoutchouc suivant la revendication 1, **caractérisé en ce qu'**il comprend un système de durcissement, qui provoque le durcissement du polymère de base par chauffage.

3. Composé de bandage pneumatique en caoutchouc suivant la revendication 1 ou 2, **caractérisé en ce que** le rapport longueur/diamètre des fibres de basalte va de 100 à 300.

4. Composé de bandage pneumatique en caoutchouc suivant une des revendications précédentes, **caractérisé en ce qu'**il comprend 1 à 20 pcr de fibres de basalte.

5. Composé de bandage pneumatique en caoutchouc suivant une des revendications précédentes, **caractérisé en ce qu'**il comprend 8 à 12 pcr de fibres de basalte.

6. Composé de bandage pneumatique en caoutchouc suivant une des revendications précédentes, **caractérisé en ce que** lesdites fibres de basalte sont revêtues d'un agent de liaison du type silane.

7. Composé de bandage pneumatique en caoutchouc suivant une des revendications précédentes, **caractérisé en ce qu'**il comprend de la silice, et un agent de liaison du type silane faisant partie de la classe des trialkoxy-mercaptoalkyl-silanes.

8. Composé de bandage pneumatique en caoutchouc suivant la revendication 7, **caractérisé en ce que** ledit agent de liaison du type silane répond à la formule moléculaire (I)
SH(CH₂)₃Si(OCH₂CH₃)(O(CH₂CH₂O)₅ (CH₂) ₁₃(CH₃)₂ (I)

9. Composé de bandage pneumatique en caoutchouc suivant la revendication 7, **caractérisé en ce que** ladite silice a une surface spécifique de 100 à 220 m²/g.

10. Composé de bandage pneumatique en caoutchouc suivant une des revendications précédentes, **caractérisé en ce que** ledit polymère de base comprend un composé polymère S-SBR contenant 20 à 50 % de styrène et 30 à 70 % de groupes vinyle, et comprenant 10 à 90 % d'une première fraction ayant un poids moléculaire moyen de 50 à 100 x 10³ et une distribution des poids moléculaires ≤ 1,5, et 10 à 90 % d'une seconde fraction ayant un poids moléculaire moyen de 800 à 1500 x 10³ et une distribution des poids moléculaires ≤ 3,0.

11. Bande de roulement formée d'un composé suivant une des revendications précédentes.

12. Bandage pneumatique comprenant une bande de roulement suivant la revendication 11.
